# EUROPEAN PATENT APPLICATION

(11) **EP 2 136 494 A2**
(43) Date of publication of application: **23.12.2009**
(21) Application number: 09007889.0
(22) Date of filing: 16.06.2009
(51) Int. Cl.: H04J 3/16

(54) **Communication system, communication device and communication method**

(30) Priority: 18.06.2008 JP 2008158587
(71) Applicant: Nec Corporation, Tokyo 108-8001 (JP)
(72) Inventor: Kobatake, Yoshiharu, Tokyo 108-8001 (JP)
(74) Representative: Glawe, Delfs, Moll

(57) **Abstract**

In a communication system which communicates between communication apparatuses by using a transmission path in which a bandwidth varies, a plurality of communication lines are grouped into a plurality of multiplex groups based on priorities of data to be transmitted. The communication system includes a detecting section configured to detect a variation of the bandwidth of said transmission path; and a closing section configured to close or release said communication lines of each of said plurality of multiplex groups based on the detected variation.

## Description

### Technical Field

The present invention relates to a communication system, a communication apparatus and a communication method used therefore, and more particularly, relates to a communication technique in which a bandwidth of a transmission path is variable.

### Background Art

Generally, a large capacity transmission path is provided to transmit/receive a large amount of data. However, it requires a huge cost. For this reason, a technique is proposed in Japanese Patent Application Publication (JP-P2002-026851A) in which many small capacity lines are bundled and multiplxed, and used as the large capacity transmission path and the large capacity transmission path is divided and demultiplexed into small capacity lines.

In case of communication using the demultiplexing technique, when a part of the demultiplexed lines is disconnected, the communication cannot be permitted regardless of a state of remaining lines.

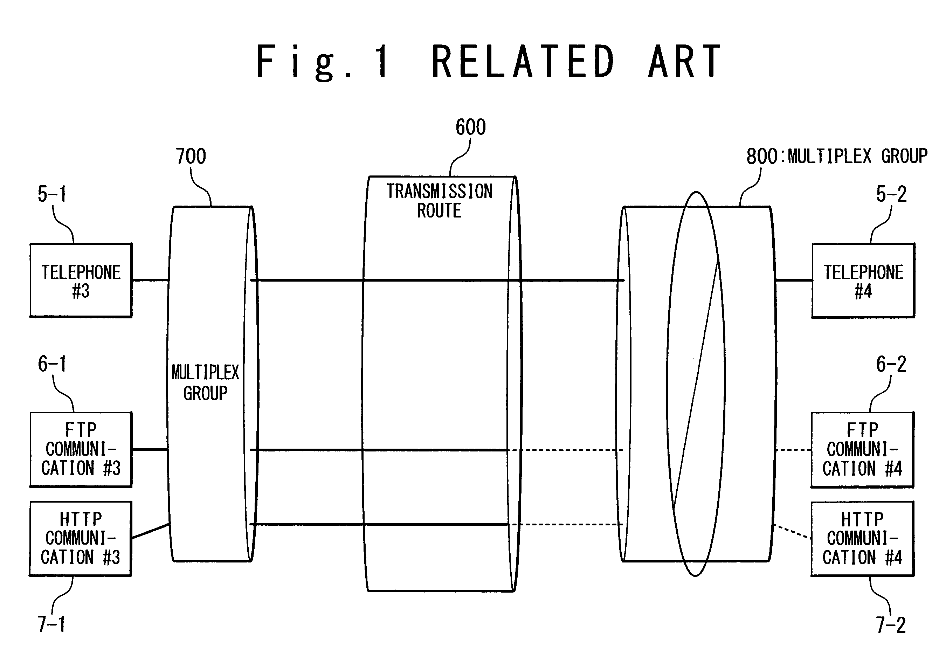

A case in which data transmission/reception is impossible will be described with reference to FIG. 1. In FIG. 1, a data is transmitted from a telephone (#3) 5-1 to a telephone (4) 5-2, a data is transmitted from an FTP (File Transfer Protocol) communication apparatus (#3) 6-1 to an FTP communication apparatus (#4) 6-2, and a data is transmitted from an HTTP (Hyper Text Transfer Protocol) communication apparatus (#3) 7-1 to an HTTP communication apparatus (#4) 7-2. Communications made therebetween are also multiplexed into a multiplex group 700. In the above state, when a usable bandwidth of a transmission path 600 is reduced so that the line for FTP communication and the line for HTTP communication are disconnected, only a telephone line is possible to continue the communication. However, in a multiplex group 800, since the above lines are disconnected and necessary data is not obtained, all the communications in the entire multiplex group 800 including the telephone (#4) 6-2 are made impossible.

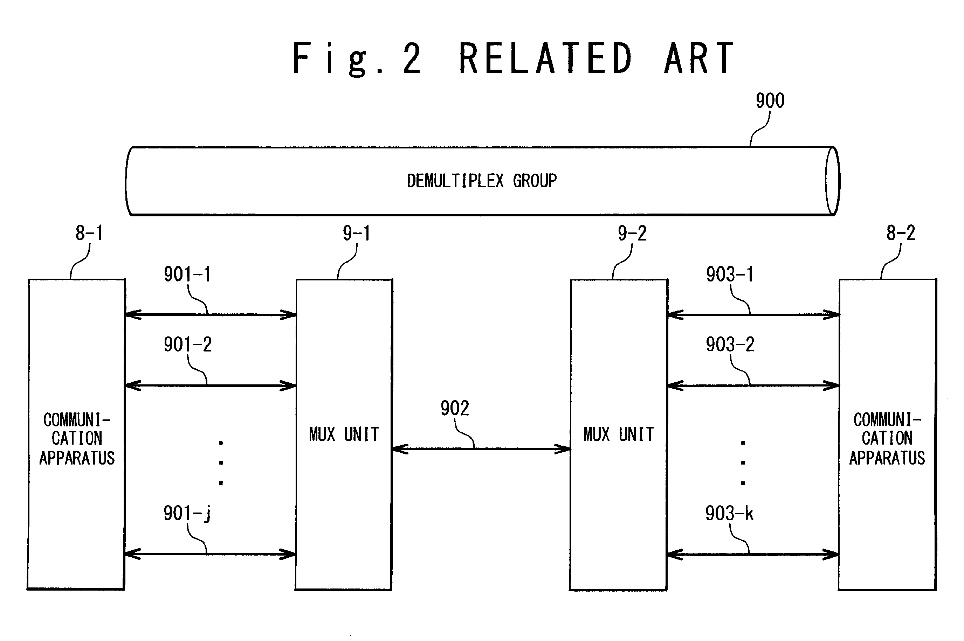

Referring to FIG. 2, a communication apparatus 8-1 communicates with a communication apparatus 8-2. The communication between the communication apparatus 8-1 and the communication apparatus 8-2 is realized by producing a demultiplex group 900 therebetween. A MUX (Multiplexing) unit 9-1 bundles a plurality of lines 901-1 to 901-j into one and uses a transmission path 902 with a variable bandwidth such as radio communication path using AMR (Adaptive Multi Rate) in order to transmit data to an MUX unit 9-2. The MUX unit 9-2 restores the transmission path 902 to a plurality of lines 903-1 to 903-k. The MUX unit 9-2 transmits the plurality of the lines 903-1 to 903-k as the multiplex group 900 to the communication device 8-2.

If a bandwidth is reduced in the transmission path 902 between the MUX unit 9-1 and the MUX unit 9-2, data is randomly discarded by the MUX units 9-1 and 9-2. In this communication system, data with a high priority is randomly discarded.

### Summary

An object of the present invention is to provide a communication system, a communication apparatus and a communication method used therefore, in which it is possible to prevent data from being randomly discarded even if a bandwidth of a transmission path is reduced.

In an aspect of the present invention, a communication system is provided which communicates between communication apparatuses by using a transmission path in which a bandwidth varies, wherein a plurality of communication lines are grouped into a plurality of multiplex groups based on priorities of data to be transmitted. The communication system includes a detecting section configured to detect a variation of the bandwidth of the transmission path; and a closing section configured to close or release the communication lines of each of the plurality of multiplex groups based on the detected variation.

In another aspect of the present invention, a communication apparatus is provided which performs communication by using a transmission path in which a bandwidth varies, wherein a plurality of communication lines are grouped into a plurality of multiplex groups based on priorities of data to be transmitted. The communication apparatus includes: a detecting section configured to detect a variation of the bandwidth of the transmission path; and a closing section configured to close or release the communication lines of each of the plurality of multiplex groups based on the detected variation.

In still another aspect of the present invention, a communication method in which communication is performed by using a transmission path in which a bandwidth varies, is achieved by grouping a plurality of communication lines into a plurality of multiplex groups based on a priority of data to be transmitted; by detecting a variation of the bandwidth of the transmission path; and by closing or releasing the communication lines of each of the plurality of multiplex groups based on the detected variation.

According to the present invention, it is possible to prevent data from being discarded randomly even if a bandwidth of a transmission path is reduced.

### Brief Description of the Drawings

The above and other objects, advantages and features of the present invention will be more apparent from the following description of certain embodiments taken in conjunction with the accompanying drawings, in which:
FIG. 1 is a diagram showing a configuration example of a conventional communication system;
FIG. 2 is a diagram showing an operation of the conventional communication system;
FIG. 3 is a block diagram showing a configuration example of a communication system according to an exemplary embodiment of the present invention;
FIG. 4 is a flowchart showing operation in a communication device according to the exemplary embodiment of the present invention; and
FIG. 5 is a diagram showing an effect of the communication system according to the exemplary embodiment of the present invention.

### Exemplary Embodiments

Hereinafter, a communication system of the present invention will be described with reference to the attached drawings.

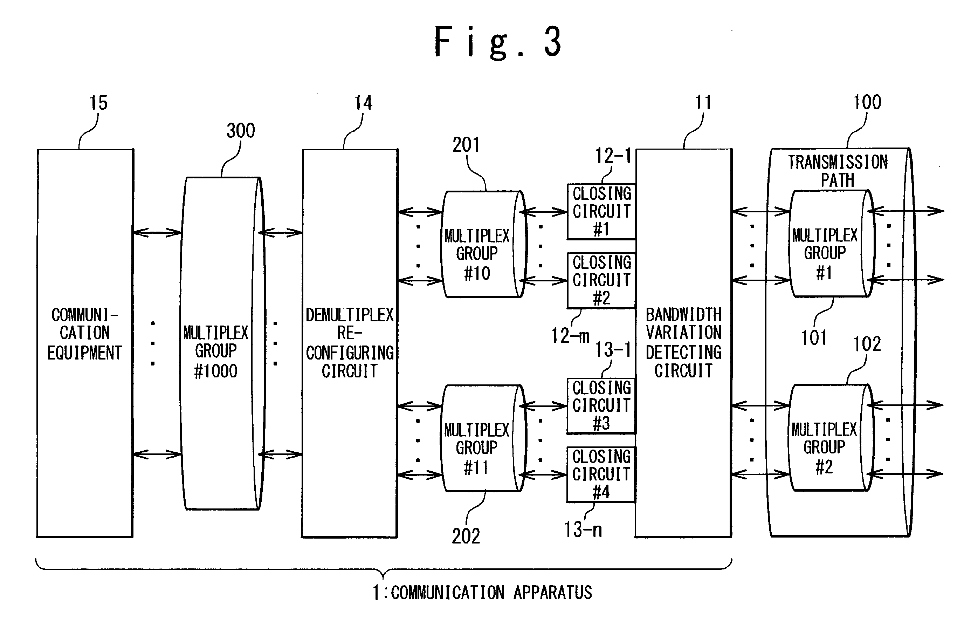

FIG. 3 is a block diagram showing a configuration example of a communication system according to an exemplary embodiment of the present invention. In FIG. 3, the communication system according to the exemplary embodiment of the present invention is configured to include a communication apparatus 1 and a transmission path 100. The communication apparatus 1 includes a bandwidth variation detecting circuit 11, closing circuits (#1) 12-1, ..., (#2) 12-m, (#3) 13-1, ..., and (#4) 13-n, a demultiplex reconfiguring circuit 14, and a communication equipment 15.

In the communication apparatus 1, a multiplex group (#1000) 300 and multiplex groups (#10 and #11) 201 and 202 are formed. The multiplex group (#1000) 300 is a group of lines to transmit/receive data from the communication equipment 15 to the demultiplex reconfiguring circuit 14. Each of the multiplex groups (#10 and #11) 201 and 202 is also a group of lines subjected to demultiplex reconfiguration.

In the transmission path 100, a multiplex group (#1) 101 and a multiplex group (#2) 102 are formed. The multiplex group (#1) 101 is a group of lines provided after the multiplex group (#10) 201 passes through the bandwidth variation detecting circuit 11, and the multiplex group (#2) 102 is a group of lines provided after the multiplex group (#11) 202 passes through the bandwidth variation detecting circuit 11. In this case, the multiplex group (#1000) 300, the multiplex groups (#10 and #11) 201 and 202, the multiplex group (#1 and #2) 101 and 102 are used as large-capacity transmission paths by bundling a plurality of lines with a low capacity.

The demultiplex reconfiguring circuit 14 regroups the lines into the multiplex groups 201 and 202 in accordance with priorities of data transferred through the multiplex group (#1000) 300. The closing circuits (#1) 12-1, ..., (#2) 12-m, (#3) 13-1, ..., and (#4) 13-n close or release the lines. The bandwidth variation detecting circuit 11 monitors and detects a variation of a communication bandwidth of the transmission path 100.

In the present exemplary embodiment, the multiplex group (#1000) 300 is grouped into the multiplex group (#10) 201 and the multiplex group (#11) 202 in accordance with the priorities. The number of the multiplex groups can be arbitrarily determined. The present exemplary embodiment can be applied to a bidirectional communication. The closing circuits (#1) 12-1, ..., (#2) 12-m, (#3) 13-1, ..., and (#4) 13-n are shown only on one side of the bandwidth variation detecting circuit 11 in FIG. 3 but they may be arranged on the other side. Moreover, a transmittable/receivable bandwidth (equivalent to a transmission path bandwidth) can be measured by using a known technique, and the measured result can be acquired as needed. An assigned bandwidth (equivalent to a data mount) can be measured from a communication amount since a port for each data is determined. It should be noted that the description of the measuring technique is omitted because it is known.

The priorities of the closing circuits (#1) 12-1, ..., (#2) 12-m, (#3) 13-1, ..., and (#4) 13-n are determined by data output ports of the bandwidth variation detecting circuit 11 and set in a priority table (not shown) in advance. Two groups are shown as the multiplex groups in the present exemplary embodiment, but three or more groups can be set as multiplex groups.

When the bandwidth variation detecting circuit 11 detects that the transmittable bandwidth of the transmission path 100 is reduced in the present exemplary embodiment, the lines of the multiplex group (#11) 202 as one of the multiplex groups (#10) 201 and (#11) 202 which has a lower priority are closed by the closing circuit (#4) 13-n. This closing operation is performed for reduction of the bandwidth in order to reduce the transmission path bandwidth. When the bandwidth variation detecting circuit 11 detects that the transmittable bandwidth of the transmission path is increased and the closed lines are currently present, the closure of the lines is released by the closing circuits (#1) 12-1, ..., (#2) 12-m, (#3) 13-1, ..., and (#4) 13-n for increase of the bandwidth in order to increase the transmission path bandwidth.

The detail of each block in the communication system according to the exemplary embodiment of the present invention will be described below.

The transmission path 100 includes the multiplex group (#1) 101 and the multiplex group (#2) 102 to transmit/receive data, and has a possibility of increase/decrease (variation) of transmissible/receivable bandwidth of the transmission path. The multiplex group (#1) 101 is provided to have the plurality of lines passing through the closing circuits (#1) 12-1, ..., and (#2) 12-m and the bandwidth variation detecting circuit 11 from the multiplex group (#10) 201. When the bandwidth variation detecting circuit 11 detects the bandwidth reduction, a part of the plurality of lines is closed for the bandwidth reduction in the multiplex group (#1) 101, and the effective bandwidth of the multiplex group (#1) 101 is made narrower than that of the multiplex group (#10) 201. At this time, data with the priority equal to or higher than that flowing through the multiplex group (#2) 102 is transmitted through the multiplex group (#1) 101.

The multiplex group (#2) 102 is provided to have the plurality of lines passing through the closing circuits (#3) 13-1, ..., and (#4) 13-n and the bandwidth variation detecting circuit 11 from the multiplex group (#11) 202. When the bandwidth variation detecting circuit 11 detects the bandwidth reduction, a part of the plurality of lines is closed for the bandwidth reduction in the multiplex group (#2) 102, and the effective bandwidth of the multiplex group (#2) 102 is made narrower than that of the multiplex group (#11) 202. At this time, data with the priority equal to or lower than that flowing through the multiplex group (#1) 101 is also transmitted through the multiplex group (#2) 102.

The bandwidth variation detecting group 11 controls the closing circuits (#1) 12-1, ..., (#2) 12-m, (#3) 13-1, ..., and (#4) 13-n to adjust the bandwidth of the transmission path 100, so as to performs a closing/releasing operation (connecting operation) to the lines from the demultiplex reconfiguring circuit 14 through the multiplex groups (#10) 201 and the multiplex group (#11) 202. Thus, the bandwidth variation detecting group 11 transmits data on the transmission path 100. Also, the bandwidth variation detecting circuit 11 controls the closing circuits (#1) 12-1, ..., (#2) 12-m, (#3) 13-1, ..., and (#4) 13-n so as to connects the lines of the multiplex group (#1) 101 and the multiplex group (#2) 102 of the transmission path 100 to the demultiplex reconfiguring circuit 14 through the multiplex groups (#10) 201 and the multiplex group (#11) 202 by the closing circuits (#1) 12-1, ..., (#2) 12-m, (#3) 13-1, ..., and (#4) 13-n.

The bandwidth variation detecting circuit 11 detects a variation of the transmissible/receivable bandwidth of the transmission path 100 and performs the closing/releasing operation to the lines by controlling the closing circuits (#1) 12-1, ..., (#2) 12-m, (#3) 13-1, ..., and (#4) 13-n. Also, when the bandwidth variation detecting circuit 11 detects a bandwidth reduction equal to or more than a predetermined value, and any closable lines are present, the bandwidth variation detecting circuit 11 controls the closing circuits (#1) 12-1, ..., (#2) 12-m, (#3) 13-1, ..., and (#4) 13-n to close a part of the closable lines in accordance with the detected bandwidth reduction. When the bandwidth variation detecting circuit 11 detects a bandwidth increase equal to or more than a predetermined value, and any closed lines are present, the bandwidth variation detecting circuit 11 controls the closing circuits (#1) 12-1, ..., (#2) 12-m, (#3) 13-1, ..., and (#4) 13-n to release a part of the closed lines in accordance with the detected bandwidth increase.

The closing circuits (#1) 12-1, ..., (#2) 12-m, (#3) 13-1, ..., and (#4) 13-n are used to close/release the lines of the multiplex group (#10) 201 and the multiplex group (#11) 202 between the demultiplex reconfiguring circuit 14 and the bandwidth variation detecting circuit 11.

The multiplex group (#10) 201 is arranged between the demultiplex group 14 and the bandwidth variation detecting circuit 11, and is reconfigured to collect the lines so as to transmit data with priorities equal to or higher than those of the multiplex group (#11) 202. The multiplex group (#11) 202 is arranged between the demultiplex group 14 and the bandwidth variation detecting circuit 11, and is reconfigured to collect the lines so as to transmit data with priorities equal to or lower than those of the multiplex group (#10) 201.

The demultiplex reconfiguring circuit 14 reconfigures data inputted from the multiplex group (#1000) 300 and having various priorities into the data with higher priorities for the multiplex group (#10) 201 and the data with lower priorities for the multiplex group (#11) 202. The demultiplex reconfiguring circuit 14 also bundles the multiplex group (#10) 201 and the multiplex group (#11) 202 to reconfigure as the multiplex group (#1000) 300.

The multiplex group (#1000) is provided by bundling the lines between the communication equipment 15 and the demultiplex reconfiguring circuit 14. The multiplex group (#1000) contains data having various priorities in the same multiplex group 300. The data having the various priorities are transmitted to and received from and into the communication equipment 15.

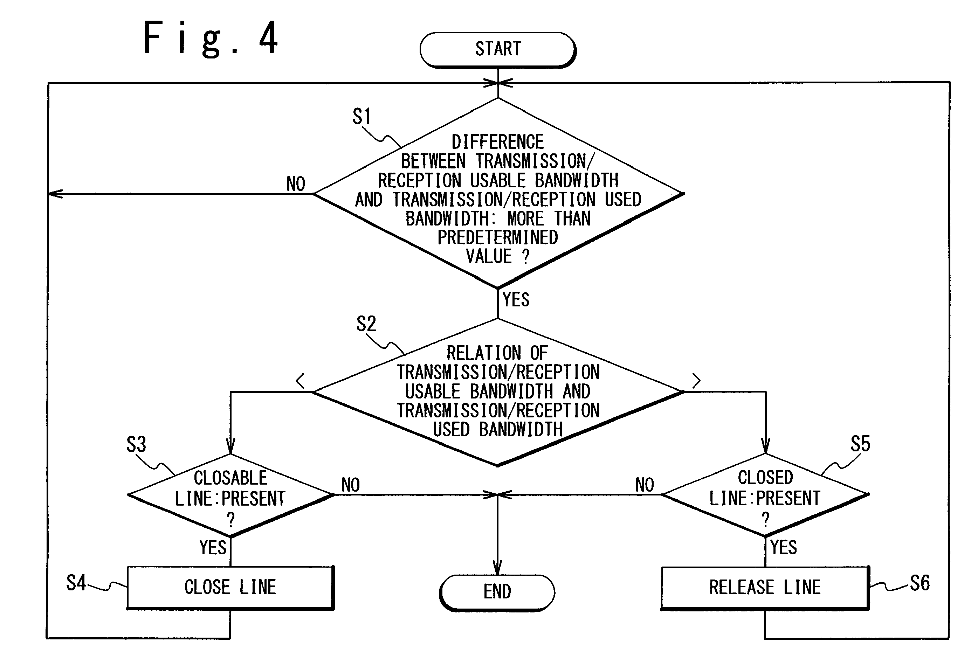

FIG. 4 is a flowchart showing an operation of the communication apparatus 1 according to the exemplary embodiment of the present invention. A process flow shown in FIG. 4 is of the bandwidth variation detecting circuit 11. The closing and releasing operation of lines also includes a selecting operation of the closing circuits (#1) 12-1, ..., (#2) 12-m, (#3) 13-1, ..., and (#4) 13-n in accordance with the priorities. In the present exemplary embodiment, a demultiplex reconfiguration is required to group the multiplex group (#1000) 300 into the multiplex groups in accordance with the priorities. The reconfiguration into the multiplex groups are performed by the demultiplex reconfiguring circuit 14. The demultiplex reconfiguring circuit 14 reconfigures the data transferred through the multiplex group (#1000) 300 and having various priorities into the data with higher priorities for the multiplex group (#10) 201 and the data with the lower priorities for the multiplex group (#11) 202.

The demultiplex reconfiguring circuit 14 transmits/receives the data to/from the bandwidth variation detecting circuit 11 by using the reconfigured multiplex groups (#10) and (#11) through the closing circuits (#1) 12-1, ..., (#2) 12-m, (#3) 13-1, ..., and (#4) 13-n.

A detailed operation when a variation is observed in a bandwidth will be described with reference to FIG. 4. It is maintained in the bandwidth variation detecting circuit 11 to monitor a bandwidth until a bandwidth variation is detected (step S1 in FIG. 4).

When the bandwidth variation exceeds a predetermined amount, e.g. the bandwidth of one line, the bandwidth variation detecting circuit 11 compares the bandwidth usable for transmission/reception in the transmission path 100 with the bandwidth used for the transmission/reception (step S2 in FIG. 4). When the bandwidth usable for the transmission/reception is lower than the bandwidth used for the transmission/reception, the bandwidth variable detecting circuit 11 checks whether or not the multiplex group (#11) 202 for data with the lower priorities includes any closed lines as closable lines (step S3 in FIG. 4). In this case, the bandwidth variation detecting line 11 ends the process flow if no closable line is present. If there is any closable line, the bandwidth variation detecting circuit 11 closes the line (step S4 in FIG. 4). Then, the process flow returns to the step S1.

Meanwhile, when the bandwidth usable for the transmission/reception is higher than the bandwidth used for the transmission/reception, the bandwidth variation detecting line 11 checks whether or not any closed line is present (step S5 in FIG. 4). If there is no closed line, the bandwidth variation detecting circuit 11 ends the process flow. In contrast, if there is any closed line, the bandwidth variation detecting circuit 11 releases the line (step S6 in FIG. 4). Then, the process flow returns to the step S1.

In this way, in the present exemplary embodiment, the multiplex group (#10) 201 for transmitting/receiving data with the higher priorities and the multiplex group (#11) 202 for transmitting/receiving data with the lower priorities are separated. Therefore, the lines of the multiplex group (#11) 202 for data with lower priorities are closed when the bandwidth usable for the transmission/reception is reduced more than the bandwidth used for the transmission/reception in the transmission path 100, so that the multiplex group (#10) 201 having data with the higher priority is unaffected to transmit/receive data. The present exemplary embodiment can deal with the bandwidth variation by closing/releasing the lines if the bandwidth usable for the transmission/reception in the transmission path 100 (corresponding to a bandwidth of the transmission path) is reduced/increased more than the bandwidth used for the transmission/reception (corresponding to an amount of transmitted/received data).

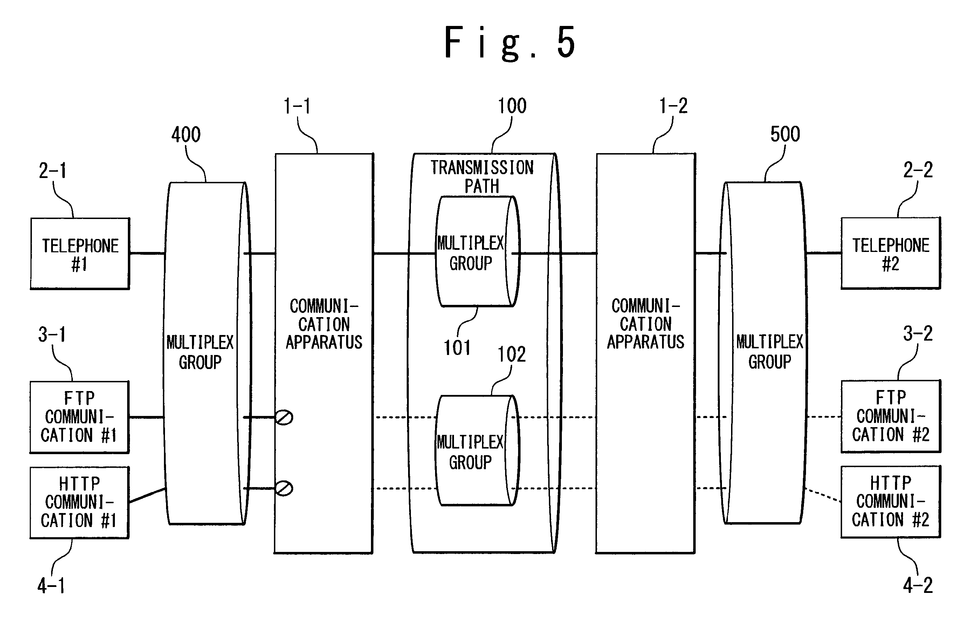

FIG. 5 is a diagram to explain an effect of the communication system according to the exemplary embodiment of the present invention. With reference to FIG. 5, an example in which data with high priorities is transmitted/received without influence even when the communication bandwidth is reduced in the transmission path 100 according to the present invention.

In the example shown in FIG. 5, a telephone (#1) 2-1 communicates with a telephone (#2) 2-2, an FTP (File Transfer Protocol) communication apparatus (#1) 3-1 communicates with an FTP communication apparatus (#2) 3-2, and an HTTP (Hyper Text Transfer Protocol) communication apparatus (#1) 4-1 communicates with an HTTP communication apparatus (#2) 4-2. These communication data are collected in a multiplex group 400. The example shown in FIG. 5 also includes a communication apparatus 1-1 which is used to separate the multiplex group 400 into a multiplex group 101 with higher priorities for telephone communication, and a multiplex group 102 with lower priorities for the FTP communication and the HTTP communication. Data in the reconfigured two multiplex groups 101 and 102 are transmitted to the communication apparatus 1-2 by passing through the transmission path 100. The communication apparatus 1-2 combines data from the two multiplex groups 101 and 102 to restore in a multiplex group 500. It should be noted that each of the communication apparatuses 1-1 and 1-2 has a configuration similar to that of the above communication apparatus 1 shown in FIG. 3.

The communication apparatus 1-1 detects a reduction of the bandwidth in the communication path 100, and closes the lines of the multiplex group 102 which transmits/receives the FTP communication and the HTTP communication with lower priorities. Therefore, the FTP communication and the HTTP communication are made impossible. However, the telephone communication belonging to the other multiplex group 101 is unaffected by the bandwidth variation and communication therein is available.

As described above, according to an outline of a communication system according to the present invention, in communication using a transmission path with a variable communication bandwidth such as wireless communication to which IMA (Inverse Multiplexing on ATM (Asynchronous Transfer Mode)) and AMR (Adaptive Multi Rate) are applied, a communication system according to the present invention corresponding to a reduction of a communication bandwidth by dividing a multiplex group in accordance with a priority of data and closing a line from the one included in a group with a low priority in case of a reduction of communication bandwidth in order to realize transmission without discarding data with a high priority.

The communication system according to the present invention transmits data to a bandwidth variation detecting circuit by bundling lines for each predetermined multiplexed group in a demultiplex reconfiguring circuit. The bandwidth variation detecting circuit controls a bandwidth by comparing an amount of data received from a demultiplex reconfiguring circuit (i.e. bandwidth to transmit/receive data) and a bandwidth to output data in a transmission path (i.e. transmittable/receivable bandwidth).

The communication system according to the present invention makes it possible to correspond to a bandwidth change by closing/releasing a line when a transmittable/receivable bandwidth in a transmission path (corresponding to a bandwidth of a transmission path) is decreased or increased more than a bandwidth to transmit/receive data (corresponding to an amount of transmitted/received data). A priority order is also predetermined with respect to each closed circuit which closes/releases a line in the communication system according to the present invention, and a closed circuit is selected in accordance with the order.

While the present invention has been particularly shown and described with reference to the exemplary embodiments thereof, the present invention is not limited to these exemplary embodiments. It will be understood by those of ordinary skill in the art that various changes in form and details may be made therein without departing from the spirit and scope of the present invention as defined by the claims.

## Claims

1. A communication apparatus which performs communication by using a transmission path in which a bandwidth varies, wherein a plurality of communication lines are grouped into a plurality of multiplex groups based on priorities of data to be transmitted, said communication apparatus comprising:
a detecting section configured to detect a variation of the bandwidth of said transmission path; and
a closing section configured to close or release said communication lines of each of said plurality of multiplex groups based on the detected variation.

2. The communication apparatus according to claim 1, wherein said communication apparatus further comprises a demultiplexing reconfiguring section configured to bundle the data of different priorities for said plurality of multiplex groups, and
said detecting section detects the variation of the bandwidth by comparing a data amount from said demultiplexing reconfiguring section and the bandwidth of the transmission path on which the data to be outputted.

3. The communication apparatus according to claim 2, wherein said detecting section detects an increase or decrease of said bandwidth by comparing a bandwidth used currently in said transmission path and a usable bandwidth of said transmission path, and
said closing section closes or releases the communication lines when it is determined by said detecting section that the usable bandwidth in said transmission path is increased or decreased more than the currently used bandwidth in the transmission path.

4. The communication apparatus according to claim 3, wherein said closing section closes the communication lines of the multiplex group with a lower priority, when said detecting section detects the decrease of the bandwidth.

5. The communication apparatus according to claim 4, wherein said closing section comprises a plurality of closing circuits respectively provided for said plurality of multiplex groups,
one priority is allocated to each of said plurality of closing circuits, and
one of said plurality of closing circuits is selected based on the priority.

6. The communication apparatus according to any of claims 1 to 5, wherein said transmission path is a transmission path in which the bandwidth for the communication varies, including a radio communication applied with IMA (Inverse Multiplexing on ATM(Asynchronous Transfer Mode)) and AMR (Adaptive Multi Rate).

7. A communication system comprising:
a transmission path; and
a communication apparatus according to any of claims 1 to 6.

8. A communication method in which communication is performed by using a transmission path in which a bandwidth varies, comprising:
grouping a plurality of communication lines into a plurality of multiplex groups based on a priority of data to be transmitted;
detecting a variation of the bandwidth of said transmission path; and
closing or releasing said communication lines of each of said plurality of multiplex groups based on the detected variation.

9. The communication method according to claim 8, further comprising:
bundling the data of different priorities for said plurality of multiplex groups,
wherein said detecting comprises detecting the variation of the bandwidth by comparing a data amount from said demultiplexing reconfiguring section and the bandwidth of the transmission path on which the data to be outputted.

10. The communication method according to claim 9, wherein said detecting comprises detecting an increase or decrease of said bandwidth by comparing a bandwidth used currently in said transmission path and a usable bandwidth of said transmission path, and
said closing comprises closing or releasing the communication lines when it is determined that the usable bandwidth in said transmission path is increased or decreased more than the currently used bandwidth in the transmission path.

11. The communication method according to claim 10, wherein said closing comprises closing the communication lines of the multiplex group with a lower priority, when the decrease of the bandwidth is detected.

12. The communication method according to claim 11, wherein a plurality of closing circuits are respectively provided for said plurality of multiplex groups,
one priority is allocated to each of said plurality of closing circuits, and
one of said plurality of closing circuits is selected based on the priority.

13. The communication method according to any of claims 8 to 12, wherein said transmission path is a transmission path in which the bandwidth for the communication varies, including a radio communication applied with IMA (Inverse Multiplexing on ATM(Asynchronous Transfer Mode)) and AMR (Adaptive Multi Rate).
